# EUROPÄISCHE PATENTSCHRIFT

(11) **EP 3 157 804 B1**
(45) Veröffentlichungstag und Bekanntmachung des Hinweises auf die Patenterteilung: **15.09.2021**
(21) Anmeldenummer: 15731012.9
(22) Anmeldetag: 16.06.2015
(51) Int. Cl.: B23K 37/04

(54) **SEGMENTIERTE AUFNAHMEPLATTE FÜR EIN WERKSTÜCK**
SEGMENTED RETAINING PLATE FOR A WORKPIECE
PLAQUE DE RÉCEPTION SEGMENTÉE POUR UNE PIÈCE À USINER

(30) Priorität: 17.06.2014 DE 202014102800 U
(43) Veröffentlichungstag der Anmeldung: 26.04.2017
(73) Patentinhaber: FFT Produktionssysteme GmbH & Co. KG, 36041 Fulda (DE)
(72) Erfinder: HAHL, Manfred, 36163 Abtsroda (DE)
(74) Vertreter: SSM Sandmair
(86) Internationale Anmeldenummer: PCT/EP2015/063500
(87) Internationale Veröffentlichungsnummer: WO 2015/193331

(56) Entgegenhaltungen:
- EP-A2- 1 403 176
- WO-A1-93/01080
- CN-U- 201 677 954
- DE-A1-102012 210 546
- JP-A- 2002 219 680
- None

## Beschreibung

Die Erfindung betrifft eine Vorrichtung zum Aufnehmen und Positionieren eines Werkstückes für eine Bearbeitung mit einer segmentierten Bauteilauflage oder Aufnahmeplatte für das Werkstück, wobei die Bauteilauflage/Aufnahmeplatte wenigstens zwei separate nicht miteinander gekoppelte oder koppelbare Bauteilauflagensegmente / Aufnahmeplattensegmente und wenigstens einen Aktuator umfasst, der mit den Bauteilauflagensegmenten/Aufnahmeplattensegmenten gekoppelt oder koppelbar ist.

Um Werkstücke für eine weitere Verarbeitung im Raum zu positionieren, werden diese häufig in Werkstückaufnahmeplatten eingelegt und dort mittels einer oder mehreren Spannvorrichtungen gesichert. Die Werkstückaufnahmeplatten können mit einem freien Ende eines Roboterarms verbunden sein. Die Werkstückaufnahmen sind in einem Stück gebildet, und die Form und Größe der Werkstückaufnahme ist an die Form und Größe des aufzunehmenden Werkstücks angepasst. Das heißt, dass für jedes Werkstück eine nur zur Aufnahme dieses Werkstückes geeignete Werkstückaufnahmeplatte bevorratet werden muss. Im Falle einer Beschädigung der Werkstückaufnahmeplatte muss im ungünstigsten Fall die ganze Platte neu hergestellt werden.

Die WO 93/01080 A1 betrifft ein Verfahren und eine Vorrichtung zum Zusammenbau von dreidimensionalen Körpern wie etwa einer Autokarosserie. Die Vorrichtung umfasst eine Auflagevorrichtung für ein Werkstück. Die Auflagevorrichtung besteht aus einer Platte, mit der zum Beispiel mittels eines CAD-Programms an vorgegebenen Positionen ein oder mehrere Aufnahmeblock oder -blöcke punktgenau verbunden werden können. Jeder Aufnahmeblock besteht aus einem Fuß, einem Zwischenstück und einem an das jeweilige Werkstück angepassten Kopf.

Die EP 1 403 176 A2 betrifft ein Verfahren für eine flexible Produktionslinie. Die Produktionslinie umfasst eine oder mehrere Grundplatte/n, auf der bzw. denen eine oder mehrere Aufnahmeplatten befestigt werden kann/können.

Die JP 2002 219680 A behandelt eine Greifvorrichtung mit Saugnäpfen. Die Greifvorrichtung entnimmt Teile aus einer Presse und kann die Teile zur Weiterverarbeitung in eine andere Presse legen.

Diese Werkstückaufnahmeplatten weisen in der Regel ein hohes Gewicht auf, was eine entsprechende Dimensionierung der sie im Raum bewegenden Roboter verlangt. Zudem sind sie teuer in der Herstellung, binden aufgrund ihrer Anzahl viel Kapital und belegen einen großen Lagerraum. Alles Kosten, die sich auf den Preis des Endprodukts direkt auswirken.

Es besteht daher Interesse an Lösungen, die zu weniger Kapitalbindung und geringeren Kosten für die Werkstückaufnahmeplatten führen und eine größere Flexibilität beim Einsatz der Werkstückaufnahmeplatten ermöglichen.

Eine Aufgabe der Erfindung ist die Zurverfügungstellung einer Vorrichtung mit einer kostensparend herstellbaren und flexibel einsetzbaren Werkstückaufnahmeplatte und wenigstens einem Aktuator, der die Werkstückaufnahmeplatte im Raum bewegt.

Diese Aufgabe wird durch den Gegenstand des Anspruchs 1 gelöst. Weitere Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit den Zeichnungen, charakterisiert und spezifiziert die Erfindung zusätzlich.

Die Erfindung betrifft eine Vorrichtung zum Aufnehmen und Positionieren eines Werkstückes für eine Bearbeitung, mit einer segmentierten Werkstückaufnahmeplatte für das Werkstück, wobei die segmentierte Aufnahmeplatte wenigstens zwei separate nicht miteinander gekoppelte oder koppelbare Werkstückaufnahmeplattensegmente und wenigstens einen Aktuator umfasst, der mit den Werkstückaufnahmeplattensegmenten gekoppelt ist. Gebildet wird so eine verwandelbare Vorrichtung, das heißt eine Vorrichtung, die durch den Austausch eines, mehrerer oder aller Werkstückaufnahmeplattensegmente und/oder eine Veränderung der Endposition eines, mehrerer oder aller Aktuatoren unterschiedlichste Werkstückaufnahmeplatten bilden kann.

Bei dem Aktuator handelt es sich um einen Roboter, der wenigstens einen Roboterarm und ein Verbindungselement für jedes von ihm getragene Werkstückaufnahmeplattensegment umfasst. Dieser Aktuator bewegt die Aufnahmeplattensegmente unabhängig voneinander frei im Raum.

Als Kopplung im Sinne der Erfindung wird/werden eine mechanische und/oder eine elektrische Kopplung verstanden.

Bei der segmentierten Aufnahmeplatte oder Werkstückaufnahmeplatte handelt es sich um eine Aufnahmeplatte für ein einziges Werkstück, wobei dieses Werkstück mehrere Komponenten aufweisen kann, die vorzugsweise bereits miteinander verbunden sind. Das heißt, die Werkstückaufnahmeplattensegmente unterstützen das gleiche Werkstück und bilden gemeinsam die segmentierte Werkstückaufnahmeplatte, die eine konventionelle feste und eingemessene einstückige Werkstückaufnahmeplatte ersetzt.

Die segmentierte Aufnahmeplatte dient dazu, ein Werkstück, zum Beispiel einen Teil einer Karosserie eines Fahrzeugs, ausgerichtet oder ausrichtbar aufzunehmen und zum Beispiel für eine Bearbeitung mittels eines Werkzeuges, beispielsweise eines Bördel- und/oder Schweißwerkzeugs, zu halten.

Das Werkstück kann auf der segmentierten Werkstückaufnahmeplatte nach dem Auflegen in seine Bereitstellungs- oder Endposition auf der segmentierten Aufnahmeplatte bewegt werden, in der es für die weitere Bearbeitung ausgerichtet und positioniert ist. Es kann vorgesehen sein, das Werkstück über wenigstens eine Zwischenposition in die Bereitstellungsposition zu bewegen. In dieser wenigstens einen Zwischenposition und/oder in der Bereitstellungsposition kann das Werkstück beispielsweise von Hand oder automatisch mit Klebebändern, Kleber usw. versehen oder in anderer Weise für den folgenden Bearbeitungsschritt vorbereitet werden. Der folgende Bearbeitungsschritt, zum Beispiel ein Fügen mit wenigstens einem anderen Teil oder ein Bördeln von Randbereichen, kann nur ausgeführt werden, wenn das Werkstück in der Bereitstellungsposition auf der segmentierten Werkstückaufnahmeplatte liegt.

Vorteilhaft ist es, wenn jedes der Aufnahmeplattensegmente wenigstens eine Spannvorrichtung zum Spannen des Werkstückes umfasst. So kann das Werkstück auf jedem der Aufnahmeplattensegmente zumindest einmal relativ zu diesem Aufnahmeplattensegment festgelegt werden. Die Spannvorrichtungen können dabei so auf den Aufnahmeplattensegmenten platziert sein, dass das Werkstück auf der segmentierten Werkstückaufnahmeplatte in der Bereitstellungsposition weder linear verschoben noch verdreht oder verschwenkt werden kann, sondern durch die Spannvorrichtungen und/oder eine Ausgestaltung der Aufnahmeplattensegmente und/oder deren relative Position zueinander sicher in dieser Position gehalten wird. Besteht die segmentierte Werkstückaufnahmeplatte aus mehreren, zum Beispiel sieben Aufnahmeplattensegmenten, können einzelne Aufnahmeplattensegmente keine Spannvorrichtung aufweisen, sondern das Werkstück in einem Auflagebereich nur stützen.

Durch die aus separaten Segmenten aufgebaute Aufnahmeplatte kann die Flexibilität der segmentierten Werkstückaufnahmeplatte gegenüber den bekannten konventionellen Werkstückaufnahmeplatten wesentlich erhöht werden. Gleichzeitig können die Werkstückaufnahmeplattensegmente aus leichteren Materialien gebaut werden, da sie kleiner sind als die komplette Werkstückaufnahmeplatte und nur einen Teil der Last des Werkstücks und eventuell der durch die Bearbeitung des Werkstücks in der Bereitstellungsposition auf das Werkstückaufnahmeplattensegment wirkenden Kräfte aufnehmen müssen. Als Material kann beispielsweise Leichtmetall oder ein anderer Leichtbauwerkstoff, wie zum Beispiel ein Organoblech, ein Faserverbund, ein Kunststoff mit oder ohne Verstärkung oder ein anderes geeignetes Material, verwendet werden.

Die Vorrichtung kann mehrere Aktuatoren umfassen, und jeder der Aktuatoren kann wenigstens eines der Aufnahmeplattensegmente tragen. Bevorzugt trägt jeder der Aktuatoren jeweils ein einziges Aufnahmeplattensegment, das heißt, die Anzahl der Aufnahmeplattensegmente einer Vorrichtung ist durch die Anzahl der zur Vorrichtung gehörenden Aktuatoren begrenzt. Dabei kann eine segmentierte Werkstückaufnahmeplatte für ein Werkstück auch weniger Werkstückaufnahmeplattensegmente haben als die Vorrichtung Aktuatoren aufweist, sodass in diesem Fall nicht alle Aktuatoren benötigt werden, um die segmentierte Aufnahmeplatte auszubilden. Genauso kann eine segmentierte Werkstückaufnahmeplatte für ein anderes Werkstück mehr Werkstückaufnahmeplattensegmente aufweisen, als Aktuatoren in der Vorrichtung vorhanden sind. In diesem Fall muss wenigstens einer der Aktuatoren mehr als ein Aufnahmeplattensegment tragen und diese Aufnahmeplattensegmente bevorzugt unabhängig voneinander im Raum bewegen. Im letzteren Fall können das Bedienpersonal und/oder die Programmierer der Vorrichtung entscheiden, wo der Einsatz eines Aktuators für mehr als ein Aufnahmeplattensegment am unkritischsten und/oder am einfachsten darzustellen ist.

Jedes der Werkstückaufnahmeplattensegmente kann wenigstens eine Spannvorrichtung zum Spannen des Werkstückes aufweisen. Da sich die segmentierte Werkstückaufnahmeplatte immer aus wenigstens zwei Werkstückaufnahmeplattensegmenten zusammensetzt, wie dies bereits beschrieben wurde, kann das Werkstück dadurch zumindest in zwei Punkten so fixiert werden, dass sich das Werkstück während der Bearbeitung relativ zu der segmentierten Werkstückaufnahmeplatte nicht bewegen, das heißt weder linear verschieben noch verdrehen oder verschwenken, kann.

Der segmentierte Aufbau der Werkstückaufnahmeplatte und die Verteilung der die Werkstückaufnahmeplatte bildenden Werkstückaufnahmeplattensegmente auf mehrere Aktuatoren führen vorteilhafterweise dazu, dass das Gewicht der segmentierten Werkstückaufnahmeplatte und des darin befestigten Werkstücks von mehreren Aktuatoren aufgenommen wird. Das heißt, jeder einzelne der Aktuatoren muss weniger Gewicht tragen und im Raum bewegen, sodass die Aktuatoren kleiner gebaut werden können, was zu niedrigeren Kosten für die Aktuatoren führt und dadurch zu niedrigeren Herstellungskosten der Bauteile.

Weitere Kostenvorteile können dadurch erzielt werden, dass die Werkstückaufnahmeplattensegmente so ausgebildet sind, dass einzelne der Module für unterschiedliche Bauteile verwendet werden können. Das heißt, dass bei einem Wechsel des in der Anlage gehandhabten Werkstücks nicht notwendigerweise alle Werkstückaufnahmeplattensegmente gewechselt werden müssen, sondern nur ausgewählte. Dies kann zum Beispiel bei einem Typenwechsel in der Automobilindustrie der Fall sein, wo bereits in der Designphase bei gleichen Teilen wie Türen, Dächern, Kofferraumdeckeln etc. teilweise deckungsgleiche Spannstellen bestimmt werden können. Ein weiteres Beispiel ist eine aufeinanderfolgende Bearbeitung von Türelementen für eine Limousine und einen Kombi einer Baureihe in der gleichen Vorrichtung. Hier können die vorderen Bauteilmaße deckungsgleich sein und die hinteren Bauteilmaße ungleich. In diesem Fall wären nur die Werkstückaufnahmeplattensegmente für das hintere Bauteil auszuwechseln.

Vorteilhaft ist es auch, dass durch die Beweglichkeit der Werkstückaufnahmeplattensegmente mittels der Aktuatoren von einer festen Anzahl von Aktuatoren segmentierte Werkstückaufnahmeplatten für Werkstücke unterschiedlicher Größe und/oder Geometrie dargestellt werden können. Das heißt, die segmentierte Werkstückaufnahmeplatte kann plattenförmige Werkstücke genauso aufnehmen wie Werkstücke mit ausgeprägter Dreidimensionalität.

Wenigstens eines der Werkstückaufnahmeplattensegmente kann zumindest bereichsweise einer Kontur des aufzunehmenden Werkstückes im Bereich des Werkstückaufnahmeplattensegments entsprechen. Das heißt, das Werkstückaufnahmeplattensegment kann einer Kontur des Werkstückes im Bereich einer Kante oder Krümmung an/in dem Werkstück nachgebildet sein, wodurch das Werkstück aufgrund der geometrischen Entsprechung im Wirkbereich dieses Werkstückaufnahmeplattensegments flächig auf dem Modul aufliegt. Um das Werkstück auf diesem Werkstückaufnahmeplattensegment zu sichern, kann solch ein Modul nur eine einzige Spannvorrichtung umfassen.

Um zur Bildung der segmentierten Werkstückaufnahmeplatte die einzelnen Werkstückaufnahmeplattensegmente relativ zueinander positionsgenau im Raum auszurichten, kann jeder der Aktuatoren entsprechende Sensoren aufweisen, die die relative Lage des von ihm getragenen Werkstückaufnahmeplattensegments relativ zu den jeweils benachbarten Werkstückaufnahmeplattensegmenten feststellen. Die Werte können von einem Steuerungsrechner verarbeitet werden, der dann Stellsignale an die Aktuatoren sendet, sodass diese die einzelnen Module in die Position bewegen, in der alle Module gemeinsam die segmentierte Werkstückaufnahmeplatte bilden. Dabei können die Aktuatoren nach dem sogenannten Master-Slave-Prinzip gesteuert werden, bei dem die kooperierenden Roboter miteinander synchronisiert werden können, um auch komplizierte Bewegungsabläufe gemeinsam umsetzen zu können.

Die segmentierte Werkstückaufnahmeplatte kann im eingemessenen Zustand auch als virtuelle statische Werkstückaufnahmeplatte angesehen werden, die als Ganzes, das heißt ohne Veränderung der Positionen der einzelnen Werkstückaufnahmeplattensegmente relativ zueinander, durch die synchronisierten Roboter zum Beispiel in der Höhe verstellt, in der Ebene gedreht und/oder in beliebige Richtung geneigt werden kann. Die Werkstückaufnahmeplatte lässt sich dadurch "schwimmend" sehr präzise bewegen und kann daher während einer Bearbeitung relativ zu einem Bearbeitungswerkzeug in bearbeitungsfreundliche Lagen bewegt werden.

Ein Vorteil der segmentierten Werkstückaufnahmeplatte ist es weiterhin, dass durch die minimierte Aufnahmeplattenmasse die Zugänglichkeit für Bearbeitungswerkzeuge zu einer Unterseite des Werkstücks verbessert wird. Der gesamte Zwischenraum zwischen den einzelnen Werkstückaufnahmeplattensegmenten ermöglicht einen meist ungehinderten Zugang der Bearbeitungswerkzeuge. So kann mittels der segmentierten Werkstückaufnahmeplatte beispielsweise eine optimale Schweißvorrichtung mit optimiertem Schweißzangeneinsatz auch unter und in der Mitte des Werkstückes geschaffen werden. Dadurch kann eine komplette Ausschweißung des Bauteils in einem Arbeitsgang ermöglicht werden.

Alternativ kann die Vorrichtung ein Messsystem umfassen, das von außen die segmentierte Werkstückaufnahmeplatte, respektive die relative Lage der einzelnen Werkstückaufnahmeplattensegmente zueinander und/oder die Lage des Werkstücks im Raum exakt einmisst. Bei diesem Messsystem kann es sich insbesondere um ein bekanntes Indoor-GPS, ein laser- oder kameragestütztes Trackingsystem oder ein anderes gleichwertiges und vom Fachmann als geeignet angesehenes bekanntes Positionsmesssystem handeln.

Bei den Aktuatoren kann es sich insbesondere um absolut genaue Industrieroboter handeln, wie diese von führenden Roboterherstellern angeboten werden.

Um bei einem Werkstückwechsel einzelne oder alle Werkstückaufnahmeplattensegmente auf sämtlichen Aktuatoren schnell austauschen zu können, kann die Vorrichtung eine Wechselstation umfassen, die in der Reichweite des wenigstens einen Aktuators angeordnet ist und wenigstens einen Satz von Werkstückaufnahmeplattensegmenten bereithält. Der wenigstens eine Aktuator kann zum Wechseln einer oder mehrerer der Aufnahmeplattensegmente Zugriff auf diese Wechselstation haben.

Umfasst die Vorrichtung mehr als einen Aktuator, kann die Vorrichtung eine zentrale Wechselstation, je eine Wechselstation für eine Mehrzahl von Aktuatoren oder je eine Wechselstation für jeden der Aktuatoren umfassen.

Die Wechselstation/en kann/können zum Beispiel in der direkten Umgebung des Aktuators in Bodennähe oder im Boden eingelassen so angeordnet sein, dass sie die Bewegungsfreiheit des Aktuators, respektive eines das/die Werkstückaufnahmeplattensegment/e tragenden Aktuatorarms im Raum nicht beeinträchtigen. Bei dieser Lösung kann der Aktuator stationär ausgebildet sein, das heißt, er kann sich von seiner Position innerhalb der Vorrichtung nicht weg bewegen. Alternativ kann der oder können die Aktuatoren auch verfahrbar sein, zum Beispiel zwischen einer ersten Endposition, in der sie Zugriff zu den Werkstückaufnahmeplattensegmenten in der Wechselstation haben, und wenigstens einer zweiten Position, in der der/die Aktuator/en aus den aufgenommenen Werkstückaufnahmeplattensegmenten die segmentierte Werkstückaufnahmeplatte bildet/bilden.

Die Vorrichtung kann eine zentrale Steuerung aufweisen, die veranlassen und/oder überwachen und/oder verifizieren kann, dass der/jeder der Aktuator/en genau das/die Aufnahmeplattensegment/e aus der Wechselstation entnimmt, das/die notwendig ist/sind, um als Resultat die mosaikartige modular aufgebaute segmentierte Werkstückaufnahmeplatte für das neue Werkstück zu bilden.

Zum Bilden einer segmentierten Werkstückaufnahmeplatte aus wenigstens zwei separaten Werkstückaufnahmeplattensegmenten können gleiche und/oder unterschiedliche Werkstückaufnahmeplattensegmente mit einem Aktuator oder mehreren Aktuatoren verbunden werden. Der eine Aktuator weist wenigstens zwei Aktuatorarme mit jeweils einem freien Ende auf, wobei das freie Ende hergerichtet ist, mit einem Werkstückaufnahmeplattensegment verbunden zu werden. Bei mehreren Aktuatoren kann jeder Aktuator jeweils einen oder mehrere entsprechende Aktuatorarm/e aufweisen.

Anschließend werden die Werkstückaufnahmeplattensegmente durch den/die Aktuator/en im Raum in eine Position bewegt, in der sie eine segmentierte Werkstückaufnahmeplatte zur Aufnahme eines ersten Werkstückes bilden. Die so gebildete segmentierte Werkstückaufnahmeplatte kann dem Werkstück die gleiche Unterstützung bieten wie eine herkömmliche, feste, einstückige und eingemessene Werkstückaufnahmeplatte. Das Werkstück kann jetzt von Hand oder von einem Zuführungsroboter in die modulare Werkstückaufnahmeplatte eingelegt werden, und das Werkstück kann auf dem oder den Werkstückaufnahmemodulen mittels bekannter Spannvorrichtungen festgelegt werden.

Müssen Werkstückaufnahmeplattensegmente zum Beispiel aufgrund eines Wechsels von einem ersten Werkstück zu einem vom ersten Werkstück unterschiedlichen zweiten Werkstück gewechselt werden, werden diese von dem Aktuator vorzugsweise selbstständig aus einer Wechselstation, die in Reichweite des Aktuators oder der Aktuatoren angeordnet ist, entnommen. Nicht mehr benötigte Werkstückaufnahmeplattensegmente können in der Wechselstation abgelegt werden. Bei dem Wechsel vom ersten Werkstück zum zweiten Werkstück werden zum Beispiel je nach Bedarf kein, ein einziges, mehrere oder alle Werkstückaufnahmeplattensegment/e gewechselt.

Um die richtige Position jedes der Werkstückaufnahmeplattensegmente im Raum zu erreichen, können die Aktuatoren Stellsignale von einer Steuerung erhalten. Die Steuerung ist zum Beispiel mit einem Positionsmesssystem verbunden und vergleicht vom Positionsmesssystem erhaltene Ist-Positionsdaten der Werkstückaufnahmeplattensegmente im Raum mit vorgegebenen und in der Steuerung abgespeicherten Soll-Positionsdaten für die Werkstückaufnahmeplattensegmente. Wenn die Ist-Positionsdaten mit den Soll-Positionsdaten übereinstimmen, bilden die Werkstückaufnahmeplattensegmente gemeinsam die segmentierte Werkstückaufnahmeplatte für das darin aufzunehmende Werkstück.

Im Folgenden wird die Erfindung anhand von Figuren erläutert. Die Figuren zeigen ein Ausführungsbeispiel der Erfindung, ohne diese auf die dargestellte Ausführung zu beschränken. Die Figuren zeigen im Einzelnen:
- Figur 1: Werkstück mit segmentierter Werkstückaufnahmeplatte in einer perspektivischen Ansicht von der Seite,
- Figur 2: Werkstück mit segmentierter Werkstückaufnahmeplatte in einer perspektivischen Ansicht von oben,
- Figur 3: Werkstück mit segmentierter Werkstückaufnahmeplatte in einer perspektivischen Ansicht von unten, und
- Figur 4: Skizze einer Vorrichtung.

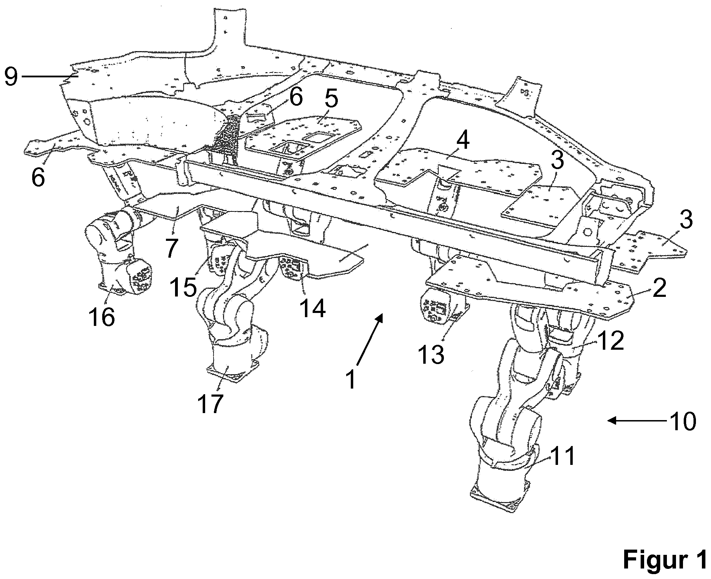

Die Figur 1 zeigt in einer perspektivischen Seitenansicht eine segmentierte Werkstückaufnahmeplatte 1 mit einem darüber schwebenden Werkstück 9. Die segmentierte Werkstückaufnahmeplatte 1 umfasst konventionelle, dem Fachmann wohl bekannte Spannvorrichtungen zum Spannen des Werkstücks 9 auf der segmentierten Werkstückaufnahmeplatte 1. Auf deren Darstellung wird verzichtet, wodurch der Kern der Erfindung deutlicher dargestellt werden kann.

Die segmentierte Werkstückaufnahmeplatte 1 besteht im gezeigten Ausführungsbeispiel der Figur 1 aus sieben Werkstückaufnahmeplattensegmenten 2, 3, 4, 5, 6, 7, 8, die gemeinsam das Werkstück 9 spannen und auf der segmentierten Werkstückaufnahmeplatte 1 ausrichten. Auch wenn die Spannvorrichtungen nicht dargestellt sind, kann man der Figur 1 entnehmen, dass die segmentierte Werkstückaufnahmeplatte 1 des Ausführungsbeispiels Werkstückaufnahmeplattensegmente 2, 3, 4, 5, 6, die vorbereitet sind, um Spannvorrichtungen aufzunehmen, und weitere Werkstückaufnahmeplattensegmente 7, 8 umfasst, die als reine Auflagen für das Werkstück 9 dienen, ohne dass sie zur Fixierung des Werkstücks 9 an oder in der segmentierten Werkstückaufnahmeplatte 1 beitragen.

Die Figur 1 zeigt weiterhin, dass im Ausführungsbeispiel jedes der Werkstückaufnahmeplattensegmente 2, 3, 4, 5, 6, 7, 8 mit einem separaten Roboter an einem freien Ende des jeweiligen Roboterarms verbunden ist. Das heißt, jedes der Werkstückaufnahmeplattensegmente 2, 3, 4, 5, 6, 7, 8 kann separat von allen anderen durch den jeweiligen Roboter frei im Raum in eine Position bewegt werden, in der es lagegenau einen Teil der segmentierten Werkstückaufnahmeplatte 1 bildet.

Wenn das Werkstück 9 auf die Werkstückaufnahmeplatte 1 gespannt ist, nimmt es eine Bereitstellungsposition ein, in der es dann beispielsweise von Hand oder maschinell bearbeitet werden kann.

Die Roboter 11, 12, 13, 14, 15, 16, 17 bilden eine Vorrichtung 10, wobei die Vorrichtung 10 dazu geeignet ist, die Werkstückaufnahmeplattensegmente 2, 3, 4, 5, 6, 7, 8 im Raum relativ zueinander so zu positionieren, dass sie die Werkstückaufnahmeplatte 1 bilden, die das Werkstück 9 ebenso unterstützt wie eine konventionelle, in einem Stück hergestellte Werkstückaufnahmeplatte nach dem Stand der Technik.

Um die Werkstückaufnahmeplattensegmente 2, 3, 4, 5, 6, 7, 8 im Raum positionsgenau ausrichten zu können, kann die Vorrichtung 10 ein weil bekannt nicht dargestelltes Positionierungssystem umfassen. Dieses Positionierungssystem kann aktuelle Ist-Positionsdaten jedes einzelnen der Werkstückaufnahmeplattensegmente 2, 3, 4, 5, 6, 7, 8 im Raum erfassen und an einen Rechner der Vorrichtung 10 senden. Im Rechner können Soll-Positionsdaten für die Werkstückaufnahmeplattensegmente 2, 3, 4, 5, 6, 7, 8 hinterlegt sein, die deren relative Soll-Positionen zueinander definieren. Der Rechner kann dann die gemessenen Ist-Positionsdaten mit den gespeicherten Soll-Positionsdaten vergleichen und bei Abweichungen Korrekturdaten generieren und an den/die jeweiligen Roboter 11, 12, 13, 14, 15, 16, 17 senden.

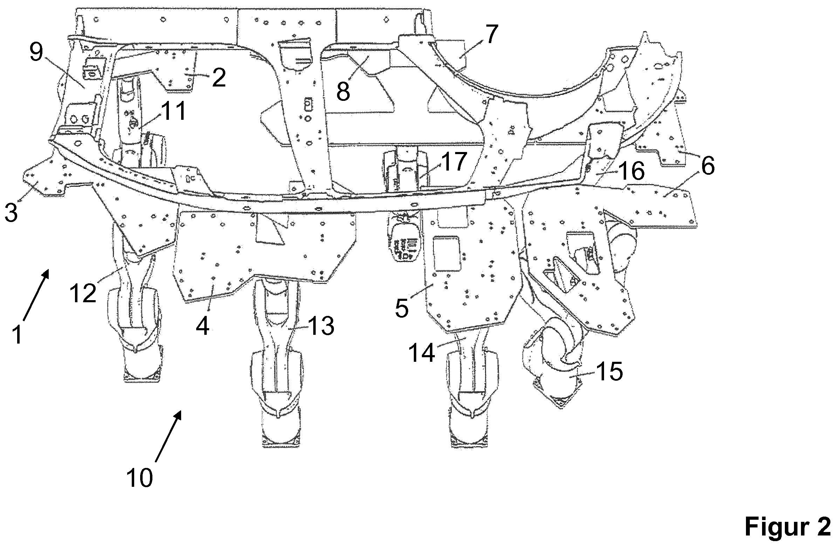

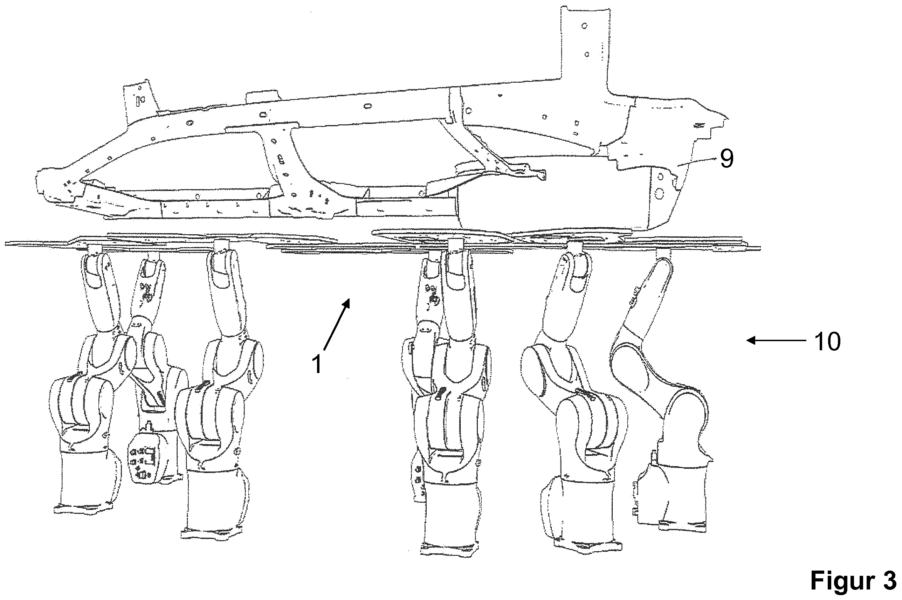

Die Figur 2 und die Figur 3 zeigen den gleichen Gegenstand wie die Figur 1, jeweils aus anderen Perspektiven.

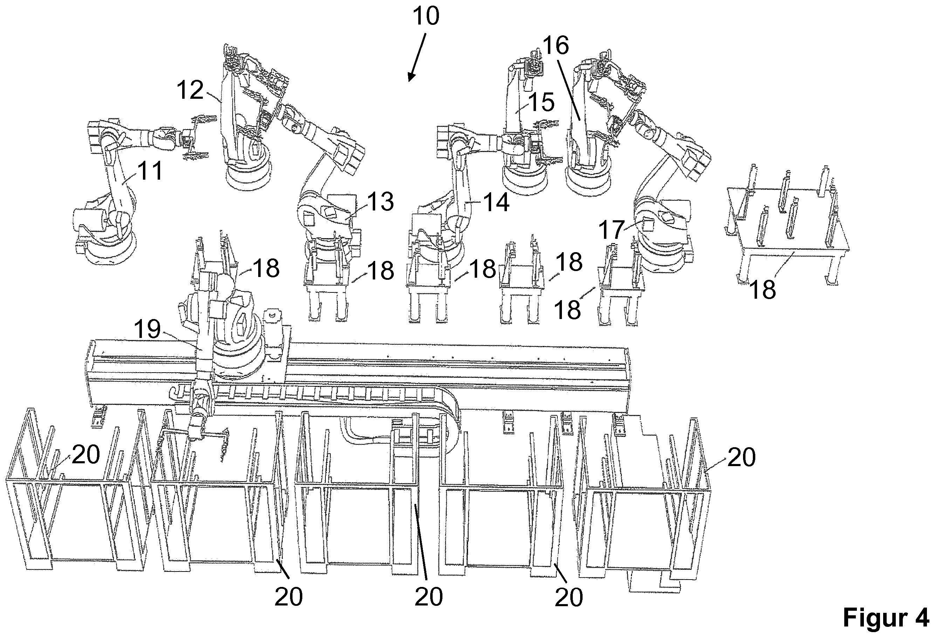

Die Figur 4 zeigt skizzenhaft die Vorrichtung 10. Um die Darstellung nicht unübersichtlich zu machen, tragen die Roboter 11, 12, 13, 14, 15, 16, 17 keine Werkstückaufnahmeplattensegmente 2, 3, 4, 5, 6, 7, 8. Auch das Werkstück 9, das durch den verfahrbaren Zuführungsroboter 19 oder (in der Figur 4 nicht gezeigt) von Werkern von Hand aus einem Lagergestell 20 entnommen und in die mittels der Roboter 11, 12, 13, 14, 15, 16, 17 aus den Werkstückaufnahmeplattensegmenten 2, 3, 4, 5, 6, 7, 8 gebildete, nicht gezeigte, segmentierte Werkstückaufnahmeplatte 1 eingelegt werden kann, ist nicht dargestellt.

Die Vorrichtung 10 umfasst mehrere Wechselstationen 18, in denen ein Satz von Werkstückaufnahmeplattensegmenten 2, 3, 4, 5, 6, 7, 8 vorhanden ist. Die Wechselstationen 18 sind in Greifweite der Roboter 11, 12, 13, 14, 15, 16, 17 angeordnet, und die Roboter 11, 12, 13, 14, 15, 16, 17 können zum Beispiel bei einem Wechsel der in der Vorrichtung 10 gehandhabten Werkstücke 9 automatisch ein nicht mehr benötigtes Werkstückaufnahmeplattensegment 2, 3, 4, 5, 6, 7, 8 in der Wechselstation 18 ablegen und ein anderes Werkstückplattensegment 2, 3, 4, 5, 6, 7, 8 aufnehmen.

Bei dem Wechsel des Werkstückes 9 müssen nicht notwendigerweise alle Werkstückaufnahmeplattensegmente 2, 3, 4, 5, 6, 7, 8 auf allen Robotern 11, 12, 13, 14, 15, 16, 17 gewechselt werden. Es kann genügen, dass beim Werkstückwechsel nur ein einziges Werkstückaufnahmeplattensegment 2, 3, 4, 5, 6, 7, 8 oder nur ein Teil der Werkstückaufnahmeplattensegmente 2, 3, 4, 5, 6, 7, 8 gewechselt wird, um die segmentierte Werkstückaufnahmeplatte 1 des alten Werkstücks 9 in die segmentierte Werkstückaufnahmeplatte 1 für das neue Werkstück 9 umzuwandeln. In jedem Fall sollte danach eine neue Positionsvermessung durchgeführt werden, da der Austausch auch nur eines Werkstückaufnahmeplattensegments 2, 3, 4, 5, 6, 7, 8 eine neue relative Ausrichtung eines oder mehrerer oder aller weiteren Werkstückaufnahmeplattensegmente 2, 3, 4, 5, 6, 7, 8 nach sich ziehen kann.

Es müssen auch nicht immer alle Werkstückaufnahmeplattensegmente 2, 3, 4, 5, 6, 7, 8 notwendig sein, um die segmentierte Werkstückaufnahmeplatte 1 für ein neues Werkstück 9 zu bilden. Nicht benötigte Roboter 11, 12, 13, 14, 15, 16, 17 bzw. Werkstückaufnahmeplattensegmente 2, 3, 4, 5, 6, 7, 8 können aus dem Aktionsradius bzw. der Bereitstellungsposition gebracht, zum Beispiel entsprechend verfahren werden, bzw. der Roboter kann eine minimale Platzgeometrie einnehmen, um möglichst wenig im Arbeitsbereich zu stören. Dadurch kann aus prozesstechnischen Gründen im Folgezyklus das Werkstückaufnahmeplattensegment 2, 3, 4, 5, 6, 7, 8 schnell wieder in Arbeitsposition gebracht werden. Dies ist insbesondere sinnvoll bei Werkstückaufnahmeplattensegmente 2, 3, 4, 5, 6, 7, 8, die beispielsweise im übernächsten Produktionszyklus wieder gebraucht werden und so nur vorübergehend "abgeduckt" werden.

### Bezugszeichenliste

- 1: segmentierte Werkstückaufnahmeplatte
- 2: Werkstückaufnahmeplattensegment
- 3: Werkstückaufnahmeplattensegment
- 4: Werkstückaufnahmeplattensegment
- 5: Werkstückaufnahmeplattensegment
- 6: Werkstückaufnahmeplattensegment
- 7: Werkstückaufnahmeplattensegment
- 8: Werkstückaufnahmeplattensegment
- 9: Werkstück
- 10: Vorrichtung
- 11: Roboter
- 12: Roboter
- 13: Roboter
- 14: Roboter
- 15: Roboter
- 16: Roboter
- 17: Roboter
- 18: Wechselstation
- 19: Zuführungsroboter
- 20: Lagergestell

## Patentansprüche

1. Vorrichtung zum Aufnehmen und Positionieren eines Werkstückes (9) für eine Bearbeitung, die Vorrichtung (10) umfassend
eine segmentierte Werkstückaufnahmeplatte (1) für das Werkstück (9), wobei die segmentierte Werkstückaufnahmeplatte (1) wenigstens zwei separate nicht miteinander gekoppelte oder koppelbare Werkstückaufnahmeplattensegmente (2, 3, 4, 5, 6, 7, 8) umfasst, und
wenigstens einen Aktuator (11, 12, 13, 14, 15, 16, 17), der mit den Werkstückaufnahmeplattensegmenten (2, 3, 4, 5, 6, 7, 8) gekoppelt ist, **dadurch gekennzeichnet, dass** der wenigstens eine Aktuator ein Roboter ist, der einen Roboterarm und ein Verbindungselement für jedes von ihm getragene Werkstückaufnahmeplattenelement (2, 3, 4, 5, 6, 7, 8) umfasst, und wobei die Werkstückaufnahmeplattensegmente (2, 3, 4, 5, 6, 7, 8) durch den wenigstens einen Aktuator (11, 12, 13, 14, 14, 16, 17) unabhängig voneinander frei im Raum bewegbar sind.

2. Vorrichtung nach Anspruch 1, wobei die Vorrichtung (10) mehrere Aktuatoren (11, 12, 13, 14, 15, 16, 17) umfasst und jeder der Aktuatoren (11, 12, 13, 14, 15, 16, 17) wenigstens eines der Werkstückaufnahmeplattensegmente (2, 3, 4, 5, 6, 7, 8) trägt.

3. Vorrichtung nach einem der Ansprüche 1 oder 2, wobei wenigstens eines der Werkstückaufnahmeplattensegmente (2, 3, 4, 5, 6, 7, 8) wenigstens eine Spannvorrichtung zum Spannen des Werkstückes (9) umfasst.

4. Vorrichtung nach einem der Ansprüche 1 bis 3, wobei wenigstens eines der Werkstückaufnahmeplattensegmente (2, 3, 4, 5, 6, 7, 8) einer Kontur des Werkstückes (9) im Bereich des Werkstückaufnahmeplattensegments (2, 3, 4, 5, 6, 7, 8) entspricht und/oder wenigstens eine, bevorzugt genau eine Spannvorrichtung zum Spannen des Werkstücks (9) umfasst.

5. Vorrichtung nach einem der Ansprüche 1 bis 4, wobei die Vorrichtung (10) ein Messsystem umfasst, das den wenigstens einen Aktuator (11, 12, 13, 14, 15, 16, 17) und/oder die Werkstückaufnahmeplattensegmente (2, 3, 4, 5, 6, 7, 8) im Raum positionsgenau ausrichtet.

6. Vorrichtung nach einem der Ansprüche 1 bis 5, wobei die Vorrichtung (10) eine Wechselstation (18) umfasst, die in Reichweite des wenigstens einen Aktautors (11, 12, 13, 14, 15, 16, 17) angeordnet ist, und die wenigstens einen Satz von Werkstückaufnahmeplattensegmenten (2, 3, 4, 5, 6, 7, 8) bereit hält, wobei der wenigstens eine Aktuator (11, 12, 13, 14, 15, 16, 17) zum Wechseln eines oder mehrerer der Werkstückaufnahmeplattensegmente (2, 3, 4, 5, 6, 7, 8) Zugriff auf die Wechselstation (18) hat.

7. Vorrichtung nach einem der Ansprüche 1 bis 6, wobei bei einem Werkstückwechsel alle, nur ein Teil oder nur ein einziges der Werkstückaufnahmeplattensegmente (2, 3, 4, 5, 6, 7, 8) gewechselt werden.

8. Vorrichtung nach einem der Ansprüche 1 bis 7, wobei die Werkstückaufnahmeplattensegmente (2, 3, 4, 5, 6, 7, 8) aus Leichtmetall oder einem Leichtbauwerkstoff, wie Organoblech, Faserverbund, Kunststoff oder einem Werkstoff mit vergleichbaren Eigenschaften hergestellt sind.

9. Vorrichtung nach einem der Ansprüche 1 bis 8, wobei die segmentierte Aufnahmeplatte (1) aus einem ersten Werkstückaufnahmeplattensegment (2, 3, 4, 5, 6, 7, 8) und wenigstens einem separatenzweiten Werkstückaufnahmeplattensegment (2, 3, 4, 5, 6, 7, 8) gebildet ist,
wobei das erste Werkstückaufnahmeplattensegment (2, 3, 4, 5, 6, 7, 8) und das wenigstens eine separate zweite Werkstückaufnahmeplattensegment (2, 3, 4, 5, 6, 7, 8) jeweils wenigstens eine Spannvorrichtung zum Spannen des Werkstücks (9) umfassen.

10. Vorrichtung nach Anspruch 9, wobei die segmentierte Aufnahmeplatte (1) mehr als ein separates zweites Werkstückaufnahmeplattensegment (2, 3, 4, 5, 6, 7, 8) umfasst, und wenigstens eines der separaten zweiten Werkstückaufnahmeplattensegmente (2, 3, 4, 5, 6, 7, 8) keine Spannvorrichtung umfasst, und dieses wenigstens eine der separaten zweiten Werkstückaufnahmeplattensegmente (2, 3, 4, 5, 6, 7, 8), wenn das Werkstück (9) in der segmentierten Aufnahmeplatte (1) zur Bearbeitung eingespannt ist, das Werkstück (9) stützt.

## Claims

1. A device for receiving and positioning a workpiece (9) for processing, the device (10) comprising: a segmented workpiece receiving plate (1) for the workpiece (9), wherein the segmented workpiece receiving plate (1) comprises at least two separate workpiece receiving plate segments (2, 3, 4, 5, 6, 7, 8) which neither are nor can be coupled to each other; and
at least one actuator (11, 12, 13, 14, 15, 16, 17) which is coupled to the workpiece receiving plate segments (2, 3, 4, 5, 6, 7, 8),
**characterised in that** the at least one actuator is a robot which comprises a robot arm and a connecting element for each workpiece receiving plate segment (2, 3, 4, 5, 6, 7, 8) borne by it, wherein the workpiece receiving plate segments (2, 3, 4, 5, 6, 7, 8) can be moved freely in space, independently of each other, by the at least one actuator (11, 12, 13, 14, 14, 16, 17).

2. The device according to claim 1, wherein the device (10) comprises a plurality of actuators (11, 12, 13, 14, 15, 16, 17), and each of the actuators (11, 12, 13, 14, 15, 16, 17) bears at least one of the workpiece receiving plate segments (2, 3, 4, 5, 6, 7, 8).

3. The device according to any one of claims 1 and 2, wherein at least one of the workpiece receiving plate segments (2, 3, 4, 5, 6, 7, 8) comprises at least one tensing device for tensing the workpiece (9).

4. The device according to any one of claims 1 to 3, wherein at least one of the workpiece receiving plate segments (2, 3, 4, 5, 6, 7, 8) corresponds to a contour of the workpiece (9) in the region of the workpiece receiving plate segment (2, 3, 4, 5, 6, 7, 8) and/or comprises at least one and preferably exactly one tensing device for tensing the workpiece (9).

5. The device according to any one of claims 1 to 4, wherein the device (10) comprises a measuring system which spatially aligns the at least one actuator (11, 12, 13, 14, 15, 16, 17) and/or the workpiece receiving plate segments (2, 3, 4, 5, 6, 7, 8) in a precise position.

6. The device according to any one of claims 1 to 5, wherein the device (10) comprises a changing station (18) which is arranged within reach of the at least one actuator (11, 12, 13, 14, 15, 16, 17) and holds at least one set of workpiece receiving plate segments (2, 3, 4, 5, 6, 7, 8) ready, wherein the at least one actuator (11, 12, 13, 14, 15, 16, 17) has access to the changing station (18) for changing one or more of the workpiece receiving plate segments (2, 3, 4, 5, 6, 7, 8).

7. The device according to any one of claims 1 to 6, wherein all or only some or only one of the workpiece receiving plate segments (2, 3, 4, 5, 6, 7, 8) is/are changed when a workpiece is changed.

8. The device according to any one of claims 1 to 7, wherein the workpiece receiving plate segments (2, 3, 4, 5, 6, 7, 8) are made of a light metal or lightweight material such as an organic sheet, fibre composite, plastic or a material exhibiting comparable properties.

9. The device according to any one of claims 1 to 8, wherein the segmented receiving plate (1) is formed from a first workpiece receiving plate segment (2, 3, 4, 5, 6, 7, 8) and at least one separate second workpiece receiving plate segment (2, 3, 4, 5, 6, 7, 8), wherein the first workpiece receiving plate segment (2, 3, 4, 5, 6, 7, 8) and the at least one separate second workpiece receiving plate segment (2, 3, 4, 5, 6, 7, 8) each comprise at least one tensing device for tensing the workpiece (9).

10. The device according to claim 9, wherein the segmented receiving plate (1) comprises more than one separate second workpiece receiving plate segment (2, 3, 4, 5, 6, 7, 8), and at least one of the separate second workpiece receiving plate segments (2, 3, 4, 5, 6, 7, 8) does not comprise a tensing device, and said at least one of the separate second workpiece receiving plate segments (2, 3, 4, 5, 6, 7, 8) supports the workpiece (9) when the workpiece (9) is clamped in the segmented receiving plate (1) for processing.

## Revendications

1. Dispositif pour recevoir et positionner une pièce à usiner (9) pour le traitement, le dispositif (10) comprenant :
une plaque de réception de pièce segmentée (1) pour la pièce à usiner (9), la plaque de réception de pièce segmentée (1) comprenant au moins deux segments de plaque de réception de pièce séparés (2, 3, 4, 5, 6, 7, 8) qui ne sont ni peuvent être couplés les uns aux autres ; et
au moins un actionneur (11, 12, 13, 14, 15, 16, 17) qui est couplé aux segments de plaque de réception de pièce (2, 3, 4, 5, 6, 7, 8),
**caractérisé en ce que** ledit au moins un actionneur est un robot qui comprend un bras de robot et un élément de liaison pour chaque segment de plaque de réception de pièce (2, 3, 4, 5, 6, 7, 8) qu'il porte, les segments de plaque de réception de pièce (2, 3, 4, 5, 6, 7, 8) pouvant être déplacés librement dans l'espace, indépendamment les uns des autres, par ledit au moins un actionneur (11, 12, 13, 14, 14, 16, 17).

2. Dispositif selon la revendication 1, dans lequel le dispositif (10) comprend plusieurs actionneurs (11, 12, 13, 14, 15, 16, 17), chacun des actionneurs (11, 12, 13, 14, 15, 16, 17) portant au moins un des segments de plaque de réception de pièce (2, 3, 4, 5, 6, 7, 8).

3. Dispositif selon l'une quelconque des revendications 1 et 2, dans lequel au moins un des segments de plaque de réception de pièce (2, 3, 4, 5, 6, 7, 8) comprend au moins un dispositif de serrage pour serrer la pièce à usiner (9).

4. Dispositif selon l'une quelconque des revendications 1 à 3, dans lequel au moins un des segments de plaque de réception de pièce (2, 3, 4, 5, 6, 7, 8) correspond à un contour de la pièce à usiner (9) dans la région du segment de plaque de réception de pièce (2, 3, 4, 5, 6, 7, 8) et / ou comprend au moins un et de préférence exactement un dispositif de serrage pour serrer la pièce à usiner (9).

5. Dispositif selon l'une quelconque des revendications 1 à 4, dans lequel le dispositif (10) comprend un système de mesure qui aligne spatialement ledit au moins un actionneur (11, 12, 13, 14, 15, 16, 17) et / ou les segments de plaque de réception de pièce (2, 3, 4, 5, 6, 7, 8) en position précise.

6. Dispositif selon l'une quelconque des revendications 1 à 5, dans lequel le dispositif (10) comprend une station de changement (18) qui est disposée à la portée dudit au moins un actionneur (11, 12, 13, 14, 15, 16, 17) et tient au moins un jeu de segments de plaque de réception de pièce (2, 3, 4, 5, 6, 7, 8) prêt, ledit au moins un actionneur (11, 12, 13, 14, 15, 16, 17) ayant accès à la station de changement (18) pour changer un ou plusieurs des segments de plaque de réception de pièce (2, 3, 4, 5, 6, 7, 8).

7. Dispositif selon l'une quelconque des revendications 1 à 6, dans lequel tous ou seulement certains ou seulement un des segments de plaque de réception de pièce (2, 3, 4, 5, 6, 7, 8) est / sont changé(s) lorsqu'une pièce à usiner est changée.

8. Dispositif selon l'une quelconque des revendications 1 à 7, dans lequel les segments de plaque de réception de pièce (2, 3, 4, 5, 6, 7, 8) sont en métal léger ou en matériau léger tel que la tôle organique, le composite de fibres, le plastique ou un matériau présentant des propriétés comparables.

9. Dispositif selon l'une quelconque des revendications 1 à 8, dans lequel la plaque de réception segmentée (1) est constituée d'un premier segment de plaque de réception de pièce (2, 3, 4, 5, 6, 7, 8) et d'au moins un deuxième segment de plaque de réception de pièce séparé (2, 3, 4, 5, 6, 7, 8), le premier segment de plaque de réception de pièce (2, 3, 4, 5, 6, 7, 8) et ledit au moins un deuxième segment de plaque de réception de pièce séparé (2, 3, 4, 5, 6, 7, 8) comprenant respectivement au moins un dispositif de serrage pour serrer la pièce à usiner (9).

10. Dispositif selon la revendication 9, dans lequel la plaque de réception segmentée (1) comprend plus d'un deuxième segment de plaque de réception de pièce séparé (2, 3, 4, 5, 6, 7, 8), et au moins un des deuxièmes segments de plaque de réception de pièce séparés (2, 3, 4, 5, 6, 7, 8) ne comprend pas de dispositif de serrage, ledit au moins un des deuxièmes segments de plaque de réception de pièce séparés (2, 3, 4, 5, 6, 7, 8) supportant la pièce à usiner (9) lorsque la pièce à usiner (9) est serrée dans la plaque de réception segmentée (1) pour le traitement.
